**Europäisches Patentamt**

**European Patent Office**

**Office européen des brevets**

(19)

(11) Veröffentlichungsnummer: **0 114 343**
**B1**

(12) ## EUROPÄISCHE PATENTSCHRIFT

(45) Veröffentlichungstag der Patentschrift:
**29.10.86**

(51) Int. Cl.⁴: **B 65 G 47/54**

(21) Anmeldenummer: **83112814.5**

(22) Anmeldetag: **20.12.83**

(54) Kombiniertes Verteilergerät für Stückgut.

(30) Priorität: **20.12.82 DE 3247126**

(43) Veröffentlichungstag der Anmeldung:
**01.08.84 Patentblatt 84/31**

(45) Bekanntmachung des Hinweises auf die Patenterteilung:
**29.10.86 Patentblatt 86/44**

(84) Benannte Vertragsstaaten:
**AT BE CH DE FR GB IT LI NL SE**

(56) Entgegenhaltungen:
**EP - A - 0 000 321**
**DE - A - 2 419 943**
**GB - A - 2 052 457**
**GB - A - 2 104 052**

(73) Patentinhaber: **Gebhardt Fördertechnik GmbH,**
**Postfach 304, D-6920 Sinsheim (DE)**

(72) Erfinder: **Gebhardt, Günter, Hans Thoma Strasse 10,**
**D-6920 Sinsheim (DE)**

(74) Vertreter: **Neugebauer, Bernhard, Tölzer Strasse 7,**
**D-7100 Heilbronn (DE)**

## Beschreibung

Die Erfindung betrifft ein kombiniertes Verteilergerät für Stückgut, insbesondere für Paletten, mit einem auf einem Fahrwerk gelagerten Transportsystem zum Aufnehmen und Abgeben des Stückgutes, mit einem Rollen- oder Kettenförderer und einer Ladegabel als Transportsystem, die beide parallel angeordnet und in Be- und Entladerichtung antreibbar sind, wobei die Ladegabel durch eine Hubvorrichtung zwischen einer Neutralstellung unterhalb der Transportebene des Rollen- oder Kettenförderers und einer Transportstellung oberhalb der Transportebene des Rollen- oder Kettenförderers heb- und senkbar auf einem Fahrgestell gelagert ist, das in Be- und Entladerichtung verfahrbar ist.

Aus der EP-AI-0 000 321 ist bereits ein Verteilergerät nach der eingangs genannten Gattung bekannt. Das Heben und Senken der Ladegabel sowie die Bewegung in Transportrichtung erfolgt hierbei durch Hydraulikzylinder, die am dem Be- und Entladeende entgegengesetzten Ende der Ladegabel angeordnet sind. Die Hubkraft für die Hubbewegung greift somit exzentrisch an der Ladegabel an. Die Kräfte aus dem dadurch entstehenden Drehmoment müssen daher von der Lagerung der Ladegabel aufgenommen werden. Die Lagerung der Ladegabel muss daher sehr aufwendig ausgebildet sein. Darüberhinaus werden für die Transportbewegung lange Hydraulikzylinder benötigt, um eine entsprechend lange Bahn zurücklegen zu können. Aus diesen Gründen ist ein aufwendiger Aufbau erforderlich, der das Verteilergerät in seinen Abmessungen vergrössert und in Anschaffung und Unterhaltung verteuert. Weiterhin ist aus der DE-AI-24 19 943 eine Palettenförderanlage mit horizontalen Förderbahnen bekannt, die mit je einem umlaufenden Paar endloser Förderketten ausgestattet und quer zur Förderrichtung der Ketten verfahrbar ist. Diese Förderbahnen sind jedoch nicht zum unmittelbaren Aufnehmen eines ausserhalb stehenden Stückgutes geeignet, da keine Ladegabel vorgesehen ist. Gleiches gilt für das Absetzen.

Aufgabe der Erfindung ist daher die Schaffung eines universellen Verteilergerätes, durch das Stationen unterschiedlicher Ausbildung bedient werden können und das einen einfachen Aufbau aufweist. Diese Aufgabe wird durch die Erfindung dadurch gelöst, dass die Ladegabel aus zwei Ladeprofilen besteht, die am dem Be- und Entladeende entgegengesetzten Ende in einem Gehäuse starr miteinander verbunden sind, die Hubvorrichtung eine durch einen in dem Gehäuse gelagerten Hubmotor angetriebene Kurbel aufweist und die Kurbel mit dem Fahrgestell durch Stellhebel gekoppelt ist, wobei die Ladegabel mit dem Fahrgestell durch Kipphebel verbunden ist.

Die mit der Erfindung erreichten Vorteile bestehen insbesondere darin, dass durch die Ausbildung und Lagerung der Ladegabel sowie deren Antrieb durch einen Hubmotor mittels einer Kurbel und deren Ankoppelung an das Fahrgestell ein äusserst einfacher und robuster Antrieb zur Höhenverstellung geschaffen worden ist. Durch die Lagerung der Lagegabel auf einem Fahrgestell werden die Kräfte zur Unterstützung der Ladegabel in einfacher Weise unmittelbar auf die Fahrbahn übertragen. Hochbeanspruchte Lagerungen entfallen daher. Das Verteilergerät ist daher auch zum Umsetzen von schweren Stückgütern geeignet. Durch die Kombination von Hub- und Transportvorrichtung ergibt sich ein kompaktes Gerät, das in seinen Abmessungen klein und in seiner Anwendbarkeit universell ist.

Weitere Merkmale der Erfindung sind den Unteransprüchen zu entnehmen.

Ein Ausführungsbeispiel der Erfindung ist in der Zeichnung dargestellt und wird im folgenden näher beschrieben. Es zeigen:

Fig. 1 die Draufsicht auf eine Verteileranlage mit Verteilergerät und verschiedenen Aufgabestationen;

Fig. 2 die Schnittansicht gemäss Linie II–II in Fig. 1;

Fig. 3 die Schnittansicht gem. Linie III–III in Fig. 1;

Fig. 4 eine Seitenansicht des Verteilergerätes;

Fig. 5 die Draufsicht auf das Verteilergerät;

Fig. 6 die Schnittansicht gem. Linie VI–VI in Fig. 5.

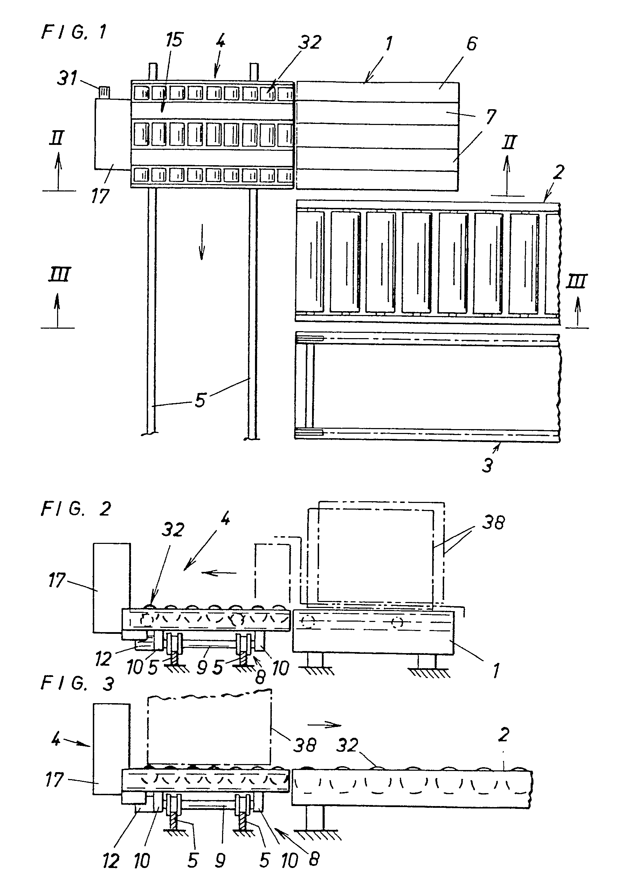

Die Fig. 1 zeigt eine Verteileranlage mit einer stationären Ablagestation 1 und mehreren Transportstationen 2 und 3. Letztere können als Rollen- oder Kettenförderer bzw. auch als Schwerkraftförderer ausgebildet sein. Natürlich können in einer Verteileranlage nach Bedarf mehrere stationäre und transportierende Stationen 1 bis 3 vorgesehen sein. An den Stirnseiten dieser Stationen 1 bis 3 ist ein Verteilergerät 4 vorgesehen, das auf Schienen 5 verfahrbar ist. Als Beispiel für die Ausbildung von Stationen weist die Ablagestation 1 eine Plattform 6 mit sich auf das Verteilergerät 4 erstreckenden Längsnuten 7 auf, während als Transportstationen ein Rollenförderer 2 in der Ausführung als angetriebener oder schwerkraftbetriebener Rollenförderer oder ein angetriebener Kettenförderer 3 vorgesehen ist, die für sich auch als Stauförderer ausgebildet sein können.

Das Verteilergerät 4 weist ein Fahrwerk 8 auf, das aus zwei Wellen 9 besteht, die in Längsprofilen 10 drehbar gelagert sind. Auf den Wellen 9 sind paarweise auf den Schienen 5 abrollende Räder 11 befestigt. Eine der Wellen 9 wird durch einen Motor 12 angetrieben, wobei vorzugsweise durch einen Riemen- oder Kettentrieb 13 eine Antriebsübertragung auf die andere Welle 9 erfolgt. Auf den Längsprofilen 10 ruhen quer zur Transportrichtung des Fahrwerks 8 gerichtete U-förmige Lagerprofile 14. So sind symmetrisch zur Querachse des Verteilergerätes 4 beiderseits jeweils zwei Lagerprofile 14' und 14" vorgesehen, von denen die inneren Lagerprofile 14' mit Abstand nebeneinander angeordnet sind. Diese dienen als Fahrbahn für eine Ladegabel 15.

Die Ladegabel 15 weist zwei parallele und sich über die Breite des Verteilergerätes 4 erstreckende, nach unten offene U-förmige Ladeprofile 16 auf, die am dem Be- und Entladeende entgegengesetzten Ende durch ein Gehäuse 17 starr miteinander verbunden sind. Jedes Ladeprofil ist auf einem Fahrgestell 18 gelagert, das in dem Lagerprofil 14' verfahrbar ist. Das Fahrgestell 18 besteht aus zwei parallelen Profilen 19, zwischen denen Rollen 20 drehbar gelagert sind. Die Profile 19 sind durch Kipphebel 21 mit den Ladeprofilen 16 gelenkig verbunden. Am gehäuseseitigen Ende ist an den Profilen 19 ein Stellhebel 22 angelenkt, der mit seinem anderen Ende an einer Kurbel 23 gelenkig gelagert ist. Letztere ist auf einer im Gehäuse 17 drehbar gelagerten Welle 24 befestigt. Diese steht über einen Riemen- oder Kettentrieb 25 mit einem Hubmotor 26 in Verbindung, der mit einem selbsthemmenden Getriebe oder einer Feststellbremse ausgestattet ist.

Am gehäuseseitigen Ende jedes Profils 19 ist ferner eine geschlossene Kette 27 o.dgl. befestigt, die durch ein am Entladeende am Lagerprofil 14' gelagertes Rad 28 umgelenkt und im Gehäuse 17 über ein Antriebsrad 29 gelegt ist. Es ist jedem der Profile 19 eine Kette 27 zugeordnet, deren Antriebsräder 29 durch eine Welle 30 miteinander gekoppelt sind. Zum Antrieb der Welle 30 dient ein Fahrmotor 31, der mit einem selbsthemmenden Getriebe oder einer Feststellbremse ausgestattet ist.

In den beiden äusseren Lagerprofilen 14" und vorzugsweise auch zwischen den beiden inneren Lagerprofilen 14' sind die Förderelemente eines transportierenden, stationären Förderers 32, wie Rollen- oder Kettenförderer, angeordnet. Dargestellt ist ein Rollenförderer mit in Transportrichtung hintereinander drehbar gelagerten Rollen 33. Mindestens die beiden äusseren Rollenreihen sind durch einen Riemen- oder Kettentrieb 34 angetrieben, die beide durch je ein durch eine Welle 35 miteinander verbundenes Rad 36 und durch einen angekoppelten Fördermotor 37 synchron angetrieben werden.

Es ist ersichtlich, dass die Ladegabel 15 in ihrer Neutralstellung unterhalb der Transportebene des Förderers 32 liegt. Soll beispielsweise ein Stückgut 38 von der Ablagestation 1 aufgenommen werden, dann fährt das Verteilergerät 4 vor diese Ablagestation 1. Die richtige Position wird durch übliche Steuerelemente in bekannter Weise überwacht und gesteuert. Sobald der Befehl zur Aufnahme des Stückgutes 38 gegeben ist, fährt die Ladegabel 15 in Richtung Ablagestation 1 vor, wobei das Fahrgestell 18 aus dem Lagerprofil 14' in die Längsnuten 7 der Ablagestation 1 rollt und die Ladeprofile 16 unter das auf der Ablagestation 1 stehende Stückgut 38 gelangen. Hierzu ist der Fahrmotor 31 eingeschaltet, um die Kette 27 im Uhrzeigersinn anzutreiben, bis eine vorbestimmte Endstellung erreicht ist, wie strichpunktiert in Fig. 2 angedeutet ist. Nunmehr wird der Hubmotor 26 eingeschaltet, so dass die Kurbeln 23 im Uhrzeigersinn drehen. Da die Profile 19 des Fahrgestells 18 durch die Ketten 27 blockiert sind, werden so die Ladeprofile 16 durch Schwenken der Kipphebel 21 im Uhrzeigersinn angehoben und mit ihnen auch das Stückgut 38, wie strich-zweipunktiert angedeutet ist. Durch Einschalten des Fahrmotors 31 im Gegenuhrzeigersinn fährt die Ladegabel 15 mit dem Stückgut 38 in die Ausgangsstellung auf dem Verteilergerät 4 zurück, wo durch Einschalten des Hubmotors 26 ebenfalls im Gegenuhrzeigersinn das Stückgut 38 auf den Förderer 32 abgesetzt wird. Das Stückgut 38 kann nun durch das Verteilergerät 4 in die vorbestimmte Position vor einer anderen Station gefahren und dort übergeben werden.

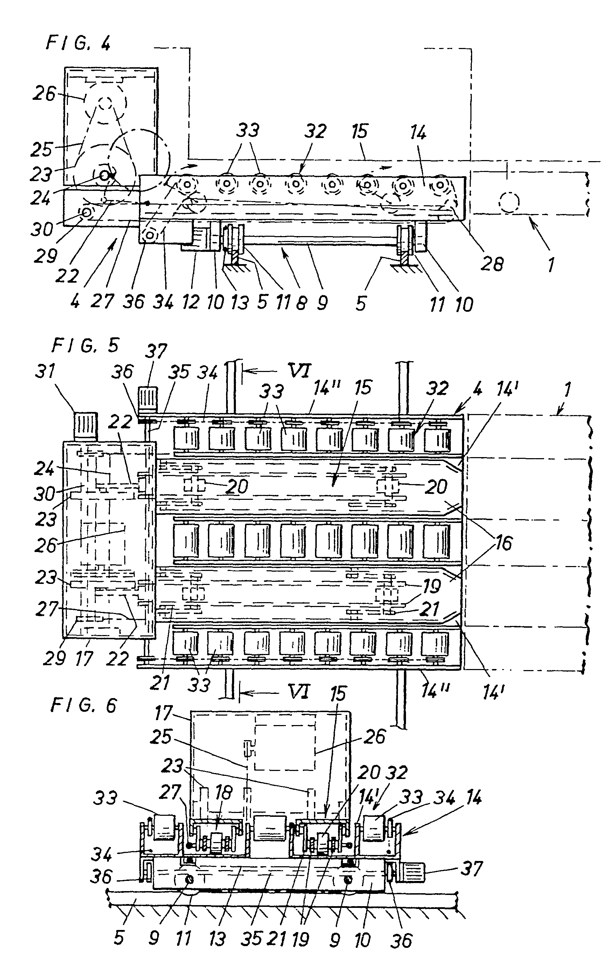

Ist diese Station als Transportstation mit Rollen- oder Kettenförderer ausgebildet, dann wird der Fördermotor 37 eingeschaltet, so dass die Rollen 33 oder die Ketten des Förderers 32 im Uhrzeigersinn gem. Fig. 3 umlaufen und das Stückgut 38 nach rechts auf den Förderer der Transportstation 2 oder 3 gelangt, um auf diesem weitertransportiert zu werden. Natürlich kann die nachgeschaltete Entladestation auch als Ablagestation 1 ausgebildet sein. Dann wiederholt sich das beschriebene Arbeitsspiel zum Bewegen der Ladegabel 15, um das Stückgut 38 auf die Ladefläche abzusetzen. Natürlich ist eine entsprechende Steuerung vorgesehen, um das Be- und Entladen automatisch ablaufen zu lassen, wobei durch Lichtschranken o.dgl. die Bewegung des Stückgutes jeweils überwacht wird.

## Patentansprüche

1. Kombiniertes Verteilergerät für Stückgut, insbesondere für Paletten, mit einem auf einem Fahrwerk (8) gelagerten Transportsystem zum Aufnehmen und Abgeben des Stückgutes, mit einem Rollen- oder Kettenförderer (32) und einer Ladegabel (15) als Transportsystem, die beide parallel angeordnet und in Be- und Entladerichtung antreibbar sind, wobei die Ladegabel (15) durch eine Hubvorrichtung (23, 22, 21) zwischen einer Neutralstellung unterhalb der Transportebene des Rollen- oder Kettenförderers (32) und einer Transportstellung oberhalb der Transportebene des Rollen- oder Kettenförderers (32) heb- und senkbar auf einem Fahrgestell (18) gelagert ist, das in Be- und Entladerichtung verfahrbar ist, dadurch gekennzeichnet, dass die Ladegabel (15) aus zwei Ladeprofilen (16) besteht, die am dem Be- und Entladeende entgegengesetzten Ende in einem Gehäuse (17) starr miteinander verbunden sind, die Hubvorrichtung eine durch einen in dem Gehäuse (17) gelagerten Hubmotor (26) angetriebene Kurbel (23) aufweist und die Kurbel (23) mit dem Fahrgestell (18) durch Stellhebel (22) gekoppelt ist, wobei die Ladegabel (15) mit dem Fahrgestell (18) durch Kipphebel (21) verbunden ist.

2. Verteilergerät nach Anspruch 1, dadurch gekennzeichnet, dass das Fahrgestell (18) der Ladegabel (15) mit umlaufenden und antreibbaren Zugmitteln, wie Ketten (27), verbunden ist, an denen die Stellhebel (22) angeschlossen sind.

3. Verteilergerät nach Anspruch 1 oder 2, dadurch gekennzeichnet, dass das Fahrgestell (18) der Ladegabel (15) in U-förmigen Lagerprofilen (14') verfahrbar ist, an deren Seitenwänden der Rollen- oder Kettenförderer (32) gelagert ist.

4. Verteilergerät nach mindestens einem der Ansprüche 1 bis 3, dadurch gekennzeichnet, dass der Motor (12) für das quer zur Transportrichtung der Ladegabel (15) auf Schienen (5) verfahrbare Fahrwerk (8), der Fahrmotor (31) für das Fahrgestell (18) und der Fördermotor (37) für den Rollen- oder Kettenförderer (32) am oder in der Nähe des Gehäuses (17) angeordnet sind.

5. Verteilergerät nach mindestens einem der Ansprüche 1 bis 4, dadurch gekennzeichnet, dass mindestens die aussen neben der Ladegabel (15) angeordneten Förderelemente des Rollen- oder Kettenförderers (32) angetrieben sind.

## Revendications

1. Appareil distributeur combiné pour des marchandises de détail, en particulier pour des palettes, doté d'un système de transport logé sur un chariot (8) et prévu pour la réception et la distribution de colis de détail. Le système de transport comprend un transporteur à rouleaux ou à chaînes (32) ainsi qu'une fourche de chargement (15) qui sont disposés, tous les deux, en position parallèle et qui peuvent être entraînés en direction de chargement ou de déchargement. La fourche de chargement (15) est logée sur un chariot (18) qui peut être levé ou baissé au moyen d'un dispositif de levage (23, 22, 21) variable en hauteur entre une position neutre au-dessous du plan du transporteur à rouleaux ou à chaînes (32) et une position de transport au-dessus du plan du transporteur à rouleaux ou à chaînes (32). Le chariot est déplaçable en direction de chargement ou de déchargement.

L'appareil est caractérisé par le fait que la fourche de chargement (15) consiste en deux profils de chargement (16) reliés rigidement, l'un avec l'autre, dans un boîtier (17) installée à l'extrémité opposée au côté de chargement et de déchargement, que le dispositif de levage est équipé d'une manivelle (23) entraîné par un moteur de levage (26) logé dans un boîtier (17), et que la manivelle (23) est accouplée au chariot par des leviers de commande (22). La fourche (15) est reliée au chariot (18) par des leviers inverseurs (21).

2. L'appareil distributeur, faisant l'objet de la revendication 1, est caractérisé par le fait que le chariot (18) est relié à la fourche de chargement (15) pourvue de moyens de traction circulants et entraînés tels que des chaînes (27) auxquels les leviers de commande (22) ont été raccordés.

3. L'appareil distributeur, faisant l'objet de la revendication 1 ou 2, est caractérisé par le fait que le chariot (18) de la fourche de chargement (15) peut être déplacé dans des profilés d'appui en U (14') aux parois latérales desquels est logé le transporteur à rouleaux ou à chaînes (32).

4. L'appareil distributeur, du moins en ce qui concerne une des revendications 1 à 3, est caractérisé par le fait que le moteur (12) du mécanisme de déplacement (8) déplaçable et roulant sur des rails (5) en direction transversale par rapport au sens de transport de la fourche de chargement (15), le moteur (31) du chariot (18) et le moteur (37) du transporteur à rouleaux ou à chaînes (32) sont disposés sur le boîtier (17) ou à proximité de celui-ci.

5. L'appareil distributeur, du moins en ce qui concerne une des revendications 1 à 4, est caractérisé par le fait qu'au moins les éléments de transport du transporteur à rouleaux ou à chaînes (32) disposés à l'extérieur de la fourche de chargement (15) sont entraînés.

## Claims

1. Combined Distributor Equipment for handling piece goods, especially pallets, for reception and delivery of piece goods by means of a conveying system consisting of a roller or chain conveyor (32) and a loading fork (15) arranged in parallel position and driven in loading and unloading direction. The loading fork (15) is supported by an undercarriage (18) that can be displaced in loading and unloading direction. An elevating mechanism (23, 22, 21) permits lifting and lowering of the loading fork. The undercarriage on which the elevating mechanism is fastened can be displaced between a neutral position below the conveying level of the roller or chain conveyor (32), and a conveying position above the conveying level of the roller or chain conveyor (32).

The features are that the loading fork consists of two loading gauges (16) which are rigidly connected inside a case (17) located at the end opposed to the loading and unloading end, and that the elevating mechanism is equipped with a crank (23) which is driven by a hoisting motor (26) installed inside the case (17), and that the crank (23) is coupled with the undercarriage (18) by switch levers (22). The loading fork (15) is connected with the undercarriage (18) by tipping levers (21).

2. The Distributor Equipment as per Claim 1 has the feature that the undercarriage (18) bearing the loading fork (15) is provided with circulating and driven drawing means such as chains (27) to which the switch levers are connected.

3. The Distributor Equipment as per Claim 1 or 2 has the features that the undercarriage (18) taking up the loading fork (15) is placed on U-shaped bearing profiles (14') and displaceable. The roller or chain conveyor is supported on their side walls.

4. The Distributor Equipment has the features, at least with regard to one of the Claims 1 to 3, that the motor (12) of the displaceable chassis (8) running on rails (5) in cross direction compared with the direction of the loading fork (15), and that the drive motor (31) for the undercarriage (18), and the conveyor motor (37) for the roller and chain conveyor (32) are mounted either on the case (17) or close to it.

5. The Distributor Equipment has the features, at least with regard to one of the Claims 1 to 4, that at least the conveying elements of the roller or chain conveyor (32), which are installed on the outside near the loading fork (15) are driven.

1/2

FIG. 1

FIG. 2

FIG. 3

5

FIG. 4

FIG. 5

FIG. 6